# EUROPEAN PATENT SPECIFICATION

(11) **EP 3 741 098 B1**
(45) Date of publication and mention of the grant of the patent: **26.08.2026**
(21) Application number: 18719067.3
(22) Date of filing: 05.04.2018
(51) Int. Cl.: H04M 1/02, H04M 1/18, G06F 1/16, G06F 3/041, H05K 5/00, B32B 17/06

(54) **GLASS HOUSING STRUCTURE FOR AN ELECTRONIC DEVICE**
GLASGEHÄUSESTRUKTUR FÜR EINE ELEKTRONISCHE VORRICHTUNG
STRUCTURE DE BOÎTIER EN VERRE POUR UN DISPOSITIF ÉLECTRONIQUE

(43) Date of publication of application: 25.11.2020
(73) Proprietor: HUAWEI TECHNOLOGIES CO., LTD., Shenzhen, Guangdong 518129 (CN)
(72) Inventor: LUO, Guoping, 16440 Kista (SE); ZHANG, Hongxue, 16440 Kista (SE); LI, Jue, 16440 Kista (SE)
(74) Representative: Gill Jennings & Every LLP
(86) International application number: PCT/EP2018/058714
(87) International publication number: WO 2019/192702

(56) References cited:
- WO-A2-2016/065089
- US-A1- 2015 342 064

## Description

### TECHNICAL FIELD

The disclosure relates to a housing structure for an electronic device comprising at least two integral housing elements connected to each other.

### BACKGROUND

The design of an electronic device is a key factor for its success in the marketplace. One design consideration is which material to use for the housing of the electronic device. A housing made of metal and glass is usually considered more high-end than a corresponding housing made of plastic.

A housing comprising glass sections is, however, generally less durable than a plastic housing. Glass is a brittle material, and the manufacturer of the glass housing has to consider not only the durability of the housing during accidental impact, but also any natural weak points in the glass member and residual stress created during manufacture.

US 9,756,739 discloses a glass housing structure used for covering a display and other internal electronic device components. The glass housing structure comprises of multiple glass members that are joined together using a glass fusing process. For example, a peripheral glass member is fused along the edge of a planar glass member to enhance the thickness of the edge and form a housing element comprising a cavity in which the above-mentioned internal components are to be located.

The fusing process, however, has its limitations and drawbacks. The process requires use of specific dies as well as high pressure and elevated temperatures, as high as 800°C. Fusing changes the structure and composition of the fused material, wherefore the properties of the material in the fused zone of the glass housing structure may be different from the properties of the remaining housing material. This may lead to the fused zone having reduced mechanical strength. Furthermore, the border between the fused glass members may be visible. Hence, there is a need for an improved solution for providing a stronger and more durable glass housing structure.

US2015342064 relates to glass device housing. WO2016065089 relates to methods and apparatus for improving reliability of cover substrate against impact fractures.

### SUMMARY

It is an object to provide an improved housing structure for an electronic device. The foregoing and other objects are achieved by the features of the independent claims. Further implementation forms are apparent from the dependent claims, the description, and the figures.

According to a first aspect, there is provided a housing structure for an electronic device comprising
at least two integral housing elements connected to each other, at least one of the housing elements being made from an integral piece of glass and comprising a section having increased dimensions, the section having increased dimensions comprising at least one of a corner section of the housing element, a through-going opening in the housing element, and a rim section of the housing element.

The housing structure is reinforced by means of increasing the dimensions of the housing element(s) in particularly exposed and sensitive areas, such as the corners of the housing element as well as adjacent any through-going openings. By making the housing element, with its increased dimensions, from one integral piece of material, the reinforcements can be placed at any position within the housing element. Furthermore, the housing element can be made stronger and more durable than a corresponding housing element formed in accordance with prior art.

In a possible implementation form of the first aspect, main planes of the housing elements extend in parallel, and at least one of the housing elements comprises a cavity for maintaining electronic components, reducing the number of components necessary for forming a housing structure to the bare minimum.

According to the claimed invention, the dimensions of the section having increased dimensions increase non-uniformly in at least one direction parallel with the main plane of the housing element, allowing the dimensions, i.e. the strength, of the reinforcement to increase and be at a maximum at the part of the housing element which is most vulnerable.

In a further possible implementation form of the first aspect,
the dimensions of the section having increased dimensions increase non-uniformly in two perpendicular directions extending in parallel with the main plane of the housing element, such that one and the same reinforcement can be extend across, e.g., an entire corner.

In a further possible implementation form of the first aspect,
the housing element comprising a section having increased dimensions comprises an inner housing surface area and an outer housing surface area, the distance between the inner housing surface area and the outer housing surface area being maximized at an apex of the corner section of the housing element in a direction parallel with the main plane of the housing element, such that the corner section is maximally reinforced at its weakest point.

In a further possible implementation form of the first aspect,
the inner housing surface area and the outer housing surface area are curved at the corner section of the housing element, the curved inner housing surface area having a radius which is larger than the curved radius of the outer housing surface area, allowing the dimensions, i.e. the strength, of the reinforcement to increase and be at a maximum at the part of the housing element which is most vulnerable without affecting the external dimensions and shape of the housing element.

In a further possible implementation form of the first aspect,
the section having increased dimensions is arranged adjacent the through-going opening and the dimensions increase in a direction perpendicular to the main plane of the housing element, allowing the edge of an opening to be reinforced.

In a further possible implementation form of the first aspect,
the housing element comprising the section having increased dimensions is machined from a solid block of glass, allowing the shape of the integral housing element to be complex yet still durable.

In a further possible implementation form of the first aspect,
the housing structure comprises an inner support frame extending within a housing element, providing the housing structure with additional reinforcement.

In a further possible implementation form of the first aspect,
the housing elements are interconnected by means of adhesive, facilitating simple and cost-effective assembly of the housing structure.

In a further possible implementation form of the first aspect,
at least one of a first housing element and a second housing element comprises a glass plate, such that at least one of the housing elements are simple and relatively cheap to manufacture.

In a further possible implementation form of the first aspect,
a third housing element comprises a spacing rim comprising the section having increased dimensions, allowing for a more simplified manufacture of the reinforced housing structure.

According to a second aspect, there is provided an electronic device comprising a housing structure according to the above, facilitating an electronic device having a more durable glass housing.

This and other aspects will be apparent from the embodiments described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1a shows an exploded sectional view of a housing structure in accordance with one embodiment of the present invention;
Fig. 1b shows a perspective view of one part of the embodiment of Fig. 1a;
Fig. 1c shows a sectional perspective view of the part shown in Fig. 1b in more detail;
Fig. 2a shows an exploded sectional view of a housing structure in accordance with one embodiment of the present invention;
Fig. 2b shows a perspective view of one part of the embodiment of Fig. 2a;
Fig. 2c shows a sectional perspective view of the part shown in Fig. 2b in more detail;
Fig. 3a shows a sectional perspective view of a part of a housing structure in accordance with one embodiment of the present invention;
Fig. 3b shows a sectional perspective view of a part of a housing structure in accordance with a further embodiment of the present invention;
Fig. 4 shows a sectional perspective view of a part of a housing structure in accordance with a further embodiment of the present invention.

### DETAILED DESCRIPTION

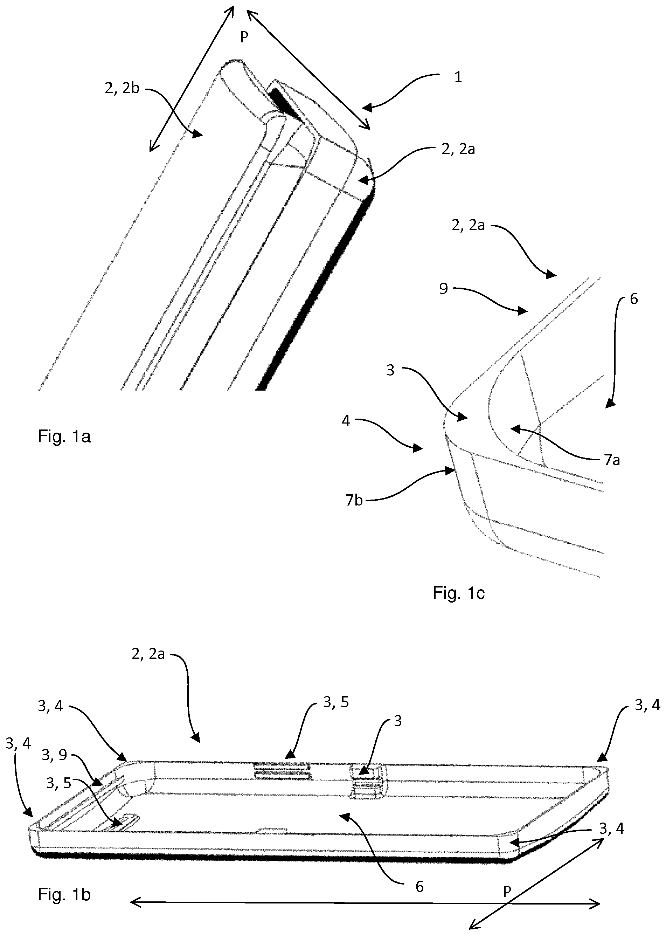

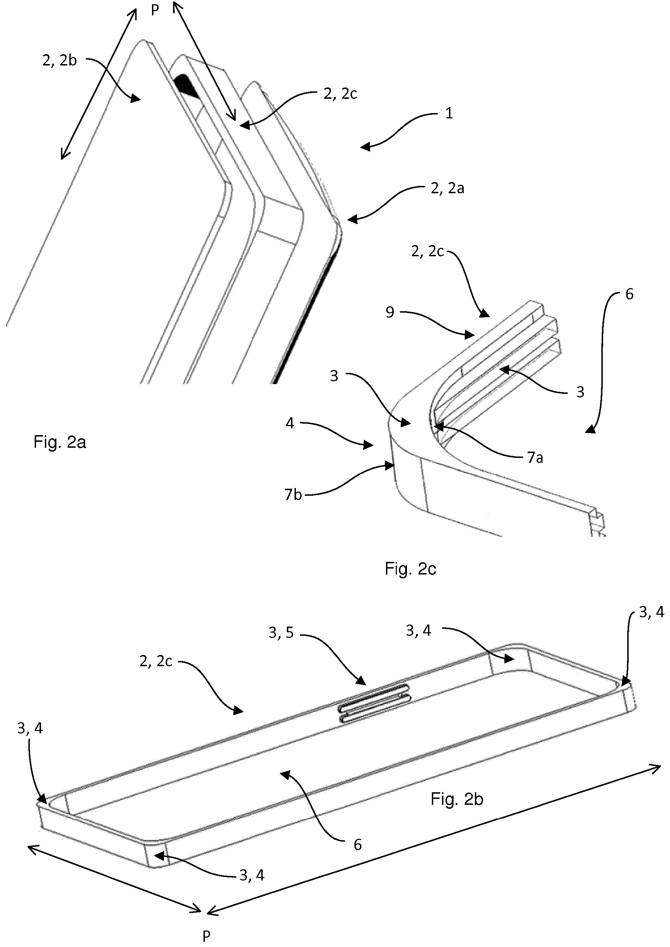

Figs. 1a and 2a show a housing structure 1 for an electronic device such as a mobile phone or a tablet in exploded view. The housing structure 1 comprises at least two integral housing elements 2 which are connected to each other. Fig. 1a shows a housing structure 1 comprising two housing elements 2a, 2b, directly connected to each other. Fig. 2a shows a housing structure 1 comprising three housing elements 2a, 2b, 2c, wherein housing element 2a and housing element 2b are connected by means of housing element 2c, which is arranged in-between housing element 2a and housing element 2b. The housing elements may be interconnected by means of adhesive, either permanently or removably.

At least one of the housing elements 2 is made from an integral piece of glass and comprises a section 3 having increased dimensions, which will be discussed in detail further below. By "integral" is meant that the housing element 2 is made from one piece of material, preferably one solid block of glass. The integral housing element 2 is preferably machined out of the solid block of glass, e.g. by means of CNC machining solely, or in combination with other methods such as laser cutting, wire cutting etc. The glass may furthermore be strengthened by means of a chemical strengthening process or reinforced by means of laminating a polymer film to the surface of the housing element 2.

The embodiment shown in Figs. 1a-c comprises a housing element 2a comprising a cavity 6 for maintaining electronic components within the housing structure 1. The cavity 6 is open at one end and, when the housing structure 1 is assembled, the cavity 6 is closed off by means of housing element 2b which is essentially planar.

The second housing element 2b may comprise a glass plate, which may be machined from a solid block of glass, or produced by any other suitable, conventional method such as floating. Fig. 1a shows an embodiment in which the first housing element 1a has the shape of an open box having a bottom and a peripheral rim enclosing the cavity 6, and the second housing element 2b is a plate.

Fig. 2a shows an embodiment in which the first housing element 2a as well as the second housing element 2b comprise of glass plates. The housing structure shown in Fig. 2a also comprises a third housing element 2c. The third housing element 2c is a spacing rim, the interior of which forms the cavity 6 for maintaining electronic components within the housing structure 1. The cavity 6 is open at two opposing ends and, when the housing structure 1 is assembled, the cavity 6 is closed off by means of the first housing element 2a and the second housing element 2b, which are both essentially planar.

When the housing structure 1 is assembled, the main planes P of the housing elements 2 extend essentially in parallel as shown in Figs. 1a and 2a. In one embodiment, the main plane P of the first housing element 2a corresponds to the rear side of an electronic device comprising the housing structure 1, and the main plane P of the second housing element 2b corresponds to the front side of an electronic device. The peripheral edge of the electronic device, extending between the front side and the rear side of the electronic device, is formed by either the peripheral rim 9 of the first housing element 2a, as shown in Figs. 1a-c, or by the third housing element/spacing rim 2c, as shown in Figs. 2a-c. The peripheral rim 9 of the first housing element 2a, as well as the rim 9 of the third housing element/spacing rim 2c extends essentially perpendicular to the main planes P of the first housing element 2a and the second housing element 2b, at least when the housing structure 1 is assembled.

At least one of the housing elements 2 comprises the above-mentioned cavity 6 for maintaining electronic components. In the embodiments shown in Figs. 1a and 2a, only one housing element, i.e. the first housing element 2a or the third housing element 2c, comprise a cavity 6. However, two or more of the housing elements 2 could comprise cavities 6, the cavities 6 together forming one larger cavity. In one embodiment, the first housing element 2a, shown in Figs. 1a-c, is combined with the third housing element 2c, shown in Figs. 2a-c. In a further embodiment, two first housing elements 2a, shown in Figs. 1a-c, are combined with the third housing element 2c, shown in Figs. 2a-c, the third housing element 2c being arranged in-between the two first housing elements 2a.

One or several of the housing elements 2 may comprise one or several sections 3 having increased dimensions, the dimensions being increased in relation to the dimensions of the remainder of the housing element 2. As shown in Figs. 1c and 2c, section 3 has a larger thickness than the rest of the housing element 2a, 2c. The housing element 2 comprising the section 3 having increased dimensions is machined from a solid block of glass. Preferably, the dimensions of section 3 increase in a direction towards the interior, i.e. into the cavity 6, of the housing element. However, it is possible for the dimensions of section 3 to increase in a direction towards the exterior of the housing element, or in both directions.

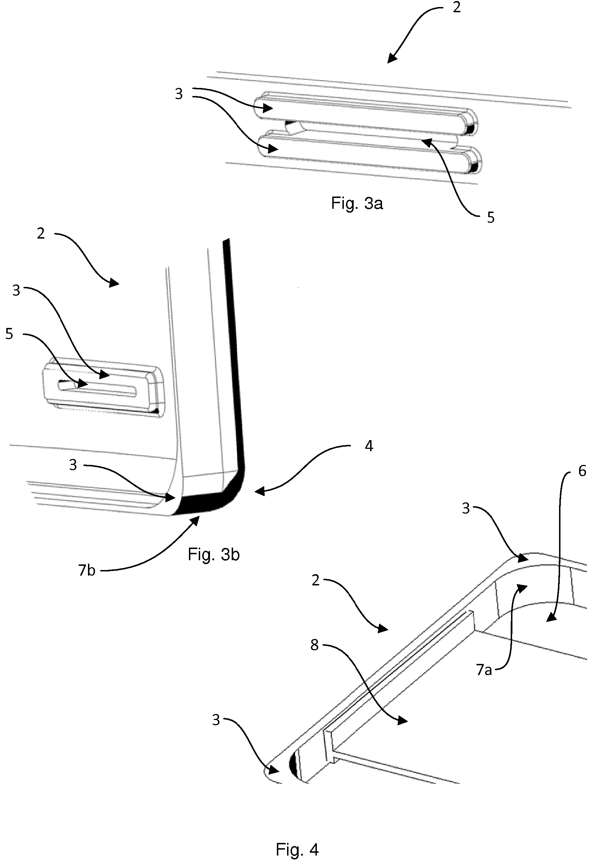

The embodiment shown in Fig. 3a shows a section 3 where the increase in dimensions, i.e. the increase in thickness, extends in parallel with the main plane of the housing element 2. The embodiment shown in Fig. 3b shows a section 3 where the increase in dimensions, i.e. the increase in thickness, extends perpendicular to the main plane of the housing element 2. The housing element 2 could comprise one or both of these embodiments, as shown in Fig. 1b.

Figs. 1c and 2c show a section 3 having increased dimensions arranged at a corner section 4 of the housing element 2a, 2c. The housing element 2 could comprise such a section 3 at one corner 4, or at several corners 4. Figs. 1 b and 2b show housing elements 2a, 2c with a section 3 having increased dimensions at each one of the four corner sections 4. The housing element 2 could furthermore comprise a section 3 having increased dimensions extending between two adjacent corner sections 4, along the inner housing surface of the housing element, as shown in Fig. 1b. Such a section 3 comprises a reinforcing rib extending in parallel with the peripheral rim section 9 of the housing element 2, along the inner housing surface.

Figs. 1b and 2b, as well as Figs. 3a-b, show a section 3 having increased dimensions arranged adjacent a through-going opening 5. The through-going opening 5 can be arranged anywhere in the housing element 2, allowing access to, e.g., buttons or ports. The through-going opening 5 can be arranged in the bottom of the housing element 2a, corresponding to the front or rear side of an electronic device comprising the housing structure 1, as shown in Figs. 1b and 3b. The through-going opening 5 can also be arranged in the peripheral rim section 9 of the housing element 2a, 2c, corresponding to the peripheral rim of the electronic device, as shown in Figs. 2b and 3a.

Fig. 1b shows an embodiment comprising sections 3 having increased dimensions arranged at the four corner sections 4 of the housing element 2a, as well as through-going openings 5, with adjacent sections 3 having increased dimensions, arranged both in the bottom, and in the peripheral rim section 9, of the housing element 2a.

In various examples, the dimensions of the section 3 having increased dimensions may increase uniformly or non-uniformly, in at least one direction parallel with the main plane P of the housing element 2 or in a direction perpendicular to the main plane P of the housing element 2. According to the claimed invention, the dimensions of the section 3 having increased dimensions increases non-uniformly in at least one direction parallel with the main plane P of the housing element 2. Fig. 3a shows the dimensions of section 3 being increased uniformly in a direction parallel with the main plane P. Fig. 3b shows the dimensions of the section 3, adjacent the through-going opening 5, increased uniformly in a direction perpendicular to the main plane P, as well as one section 3, arranged at the corner section 4, where the dimensions increase non-uniformly in two perpendicular directions extending in parallel with the main plane P of the housing element 2.

The section 3 having increased dimensions may comprise an inner housing surface area 7a and an outer housing surface area 7b, as shown in Figs. 1c, 2c, 3b, and 4. The distance between the inner housing surface area 7a and the outer housing surface area 7b, i.e. the rim 9 thickness of the housing element, may be maximized at the apex of the corner section 4 in a direction parallel with the main plane P of the housing element 2. With such a solution, the rim 9 thickness of the housing element 2 is at its thickest at the very tip of the corner section 4, such that the housing element 2 is reinforced where it is most needed.

The part of the outer housing surface area 7b which is arranged at the corner section 4 may extend at a sharp 90° angle or be convexly curved, as seen from the exterior of the housing element 2. The part of the inner housing surface area 7a which is arranged at the corner section 4 may extend at a 45° angle to the part of the inner housing surface which extends along the short and long edges of the housing element 2, such that the inner housing surface area 7a at the corner section 4 is chamfered. Furthermore, the section of the inner housing surface area 7a which is arranged at the corner section 4 may be concavely curved, as seen from within the cavity 6 of the housing element 2. Any combination of inner housing surface area 7a shape and outer housing surface area 7b shape is possible.

Figs. 1c and 2c show embodiments where the inner housing surface area 7a and the outer housing surface area 7b are both curved at the corner section 4 of the housing element 2. The curved inner housing surface area 7a has a radius which is larger than the curved radius of the outer housing surface area 7b, such that there is a section having increased dimensions, i.e. the thickness of the rim 9 increases in a direction from the short edges as well as the long edges of the housing element 2 towards the apex of the corner section 4.

The housing structure 1 may also comprise an inner support frame 8 extending within the cavity 6 of the housing element 2a, 2c, as shown in Fig. 4. The inner support frame 8 may be made of metal, plastic, or glass, and supports and reinforces one or several of the housing elements 2. In one embodiment, the inner support frame 8 comprises a center frame member which extends in between, and substantially in parallel with, the main planes P of the first housing element 2a and the second housing element 2b when the housing structure 1 is assembled. The center frame member may be a solid plate, a recessed plate, one or several, solid or recessed, beams, or have any other suitable design which extends from one side of the housing element to the other. Hence, the center frame member 7 has essentially the same width as the cavity 6, in at least one direction.

The inner support frame 8 may extend within the electronic device such that it is not in contact with any other components than the housing element 2. The inner support frame 8 may also be in contact with, but not support, one or several electronic components arranged within cavity 6 such as display, battery, circuit boards, etc. Additionally, the inner support frame 8 may function as a support for the above-mentioned one or several electronic components arranged within the cavity 6.

In one embodiment, the inner support frame 8 comprises two plates which extend perpendicular to the center frame member, at opposite edges of the center frame member, such that the inner support frame 8 has an I-shaped cross-section. The plates of the inner support frame 8 are connected to the inner housing surface of the housing element 2.

In one embodiment, there is provided an electronic device such as a mobile phone or a tablet, comprising the housing structure 1 described above. The housing structure 1 encloses most, or all of the further components such as the display, battery, circuit board, etc. The housing elements 2 together form a hollow shell. The space enclosed by the hollow shell, i.e. the cavity 6, is considered the interior of the housing structure 1 and electronic device, while the space which is not enclosed by the hollow shell is considered the exterior.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

## Claims

1. A housing structure (1) for an electronic device comprising:
at least two integral housing elements (2) connected to each other,
at least one of the housing elements (2) being made from an integral piece of glass and comprising a section (3) having increased dimensions,
the section (3) having increased dimensions comprising at least one of a corner section (4) of the housing element (2), a through-going opening (5) in the housing element (2), and a rim section (9) of the housing element (2);
wherein the dimensions of the section (3) having increased dimensions increase non-uniformly in at least one direction parallel with the main plane (P) of the housing element (2).

2. The housing structure (1) according to claim 1, wherein main planes (P) of the housing elements (2) extend in parallel, and at least one of the housing elements (2) comprises a cavity (6) for maintaining electronic components.

3. The housing structure (1) according to claim 1 or 2, wherein the dimensions of the section (3) having increased dimensions increase non-uniformly in two perpendicular directions extending in parallel with the main plane (P) of the housing element (2).

4. The housing structure (1) according to any one of the previous claims, wherein the housing element (2) comprising a section (3) having increased dimensions comprises an inner housing surface area (7a) and an outer housing surface area (7b), the distance between the inner housing surface area (7a) and the outer housing surface area (7b) being maximized at an apex of the corner section (4) of the housing element (2) in a direction parallel with the main plane (P) of the housing element (2).

5. The housing structure (1) according to claim 4, wherein the inner housing surface area (7a) and the outer housing surface area (7b) are curved at the corner section (4) of the housing element (2), the curved inner housing surface area (7a) having a radius which is larger than the curved radius of the outer housing surface area (7b).

6. The housing structure (1) according to any one of the previous claims, wherein the section (3) having increased dimensions is arranged adjacent the through-going opening (5) and the dimensions increase in a direction perpendicular to the main plane (P) of the housing element (2).

7. The housing structure (1) according to any one of the previous claims, wherein the section (3) having increased dimensions extends along the rim section (9) of the housing element (2) and the dimensions increase in a direction parallel with the main plane (P) of the housing element (2).

8. The housing structure (1) according to any one of the previous claims, wherein the housing element (2) comprising the section (3) having increased dimensions is machined from a solid block of glass.

9. The housing structure (1) according to any one of the previous claims, further comprising an inner support frame (8) extending within a housing element (2).

10. The housing structure (1) according to any one of the previous claims, wherein the housing elements (2) are interconnected by means of adhesive.

11. The housing structure (1) according to any one of the previous claims, wherein at least one of a first housing element (2a) and a second housing element (2b) comprises a glass plate.

12. The housing structure (1) according to claim 11, wherein a third housing element (2c) comprises a spacing rim comprising the section (3) having increased dimensions.

13. An electronic device comprising a housing structure (1) according to any one of claims 1 to 12.

## Patentansprüche

1. Gehäusestruktur (1) für eine elektronische Vorrichtung, umfassend:
mindestens zwei integrale Gehäuseelemente (2), die miteinander verbunden sind,
wobei mindestens eines der Gehäuseelemente (2) aus einem einzigen Glasstück hergestellt ist und einen Abschnitt (3) mit vergrößerten Abmessungen umfasst,
wobei der Abschnitt (3) mit vergrößerten Abmessungen mindestens eines von Folgendem umfasst: einem Eckabschnitt (4) des Gehäuseelements (2), einer durchgehenden Öffnung (5) in dem Gehäuseelement (2) und einem Randabschnitt (9) des Gehäuseelements (2);
wobei die Abmessungen des Abschnitts (3) mit vergrößerten Abmessungen in mindestens einer Richtung parallel zu der Hauptebene (P) des Gehäuseelements (2) ungleichmäßig zunehmen.

2. Gehäusestruktur (1) nach Anspruch 1, wobei sich die Hauptebenen (P) der Gehäuseelemente (2) parallel erstrecken und mindestens eines der Gehäuseelemente (2) einen Hohlraum (6) zum Aufnehmen von elektronischen Komponenten umfasst.

3. Gehäusestruktur (1) nach Anspruch 1 oder 2, wobei die Abmessungen des Abschnitts (3) mit vergrößerten Abmessungen in zwei zueinander senkrechten Richtungen, die sich parallel zu der Hauptebene (P) des Gehäuseelements (2) erstrecken, ungleichmäßig zunehmen.

4. Gehäusestruktur (1) nach einem der vorhergehenden Ansprüche, wobei das Gehäuseelement (2), das einen Abschnitt (3) mit vergrößerten Abmessungen umfasst, einen inneren Gehäuseoberflächenbereich (7a) und einen äußeren Gehäuseoberflächenbereich (7b) umfasst, wobei die Entfernung zwischen dem inneren Gehäuseoberflächenbereich (7a) und dem äußeren Gehäuseoberflächenbereich (7b) an einem Scheitelpunkt des Eckabschnitts (4) des Gehäuseelements (2) in einer Richtung parallel zu der Hauptebene (P) des Gehäuseelements (2) maximal ist.

5. Gehäusestruktur (1) nach Anspruch 4, wobei der innere Gehäuseoberflächenbereich (7a) und der äußere Gehäuseoberflächenbereich (7b) in dem Eckabschnitt (4) des Gehäuseelements (2) gekrümmt sind, wobei der gekrümmte innere Gehäuseoberflächenbereich (7a) einen Radius aufweist, der größer ist als der gekrümmte Radius des äußeren Gehäuseoberflächenbereichs (7b).

6. Gehäusestruktur (1) nach einem der vorhergehenden Ansprüche, wobei der Abschnitt (3) mit vergrößerten Abmessungen benachbart zu der durchgehenden Öffnung (5) angeordnet ist und die Abmessungen in einer Richtung senkrecht zu der Hauptebene (P) des Gehäuseelements (2) zunehmen.

7. Gehäusestruktur (1) nach einem der vorhergehenden Ansprüche, wobei sich der Abschnitt (3) mit vergrößerten Abmessungen entlang des Randabschnitts (9) des Gehäuseelements (2) erstreckt und die Abmessungen in einer Richtung parallel zu der Hauptebene (P) des Gehäuseelements (2) zunehmen.

8. Gehäusestruktur (1) nach einem der vorhergehenden Ansprüche, wobei das Gehäuseelement (2), das den Abschnitt (3) mit vergrößerten Abmessungen umfasst, aus einem massiven Glasblock gefertigt ist.

9. Gehäusestruktur (1) nach einem der vorhergehenden Ansprüche, ferner umfassend einen inneren Stützrahmen (8), der sich innerhalb eines Gehäuseelements (2) erstreckt.

10. Gehäusestruktur (1) nach einem der vorhergehenden Ansprüche, wobei die Gehäuseelemente (2) mittels Klebstoff miteinander verbunden sind.

11. Gehäusestruktur (1) nach einem der vorhergehenden Ansprüche, wobei mindestens eines von einem ersten Gehäuseelement (2a) und einem zweiten Gehäuseelement (2b) eine Glasplatte umfasst.

12. Gehäusestruktur (1) nach Anspruch 11, wobei ein drittes Gehäuseelement (2c) einen Abstandsrand umfasst, der den Abschnitt (3) mit vergrößerten Abmessungen umfasst.

13. Elektronische Vorrichtung, umfassend eine Gehäusestruktur (1) nach einem der Ansprüche 1 bis 12.

## Revendications

1. Structure de boîtier (1) pour un dispositif électronique comprenant :
au moins deux éléments de boîtier (2) monoblocs reliés l'un à l'autre,
au moins l'un des éléments de boîtier (2) étant constitué d'une pièce monobloc de verre et comprenant une section (3) ayant des dimensions accrues,
la section (3) ayant des dimensions accrues comprenant au moins l'une d'une section d'angle (4) de l'élément de boîtier (2), d'une ouverture traversante (5) dans l'élément de boîtier (2) et d'une section de bord (9) de l'élément de boîtier (2) ;
dans laquelle les dimensions de la section (3) ayant des dimensions accrues augmentent de manière non uniforme dans au moins une direction parallèle au plan principal (P) de l'élément de boîtier (2).

2. Structure de boîtier (1) selon la revendication 1, dans laquelle les plans principaux (P) des éléments de boîtier (2) s'étendent en parallèle, et au moins l'un des éléments de boîtier (2) comprend une cavité (6) destinée à maintenir les composants électroniques.

3. Structure de boîtier (1) selon la revendication 1 ou 2, dans laquelle les dimensions de la section (3) ayant des dimensions accrues augmentent de manière non uniforme dans deux directions perpendiculaires s'étendant en parallèle avec le plan principal (P) de l'élément de boîtier (2).

4. Structure de boîtier (1) selon l'une quelconque des revendications précédentes, dans laquelle l'élément de boîtier (2) comprenant une section (3) ayant des dimensions accrues comprend une zone de surface de boîtier intérieure (7a) et une zone de surface de boîtier extérieure (7b), la distance entre la zone de surface de boîtier intérieure (7a) et la zone de surface de boîtier extérieure (7b) étant maximisée à un sommet de la section d'angle (4) de l'élément de boîtier (2) dans une direction parallèle au plan principal (P) de l'élément de boîtier (2).

5. Structure de boîtier (1) selon la revendication 4, dans laquelle la zone de surface de boîtier intérieure (7a) et la zone de surface de boîtier extérieure (7b) sont incurvées dans la section d'angle (4) de l'élément de boîtier (2), la zone de surface de boîtier intérieure (7a) incurvée ayant un rayon plus grand que le rayon incurvé de la zone de surface de boîtier extérieure (7b).

6. Structure de boîtier (1) selon l'une quelconque des revendications précédentes, dans laquelle la section (3) ayant des dimensions accrues est disposée adjacente à l'ouverture traversante (5) et les dimensions augmentent dans une direction perpendiculaire au plan principal (P) de l'élément de boîtier (2) .

7. Structure de boîtier (1) selon l'une quelconque des revendications précédentes, dans laquelle la section (3) ayant des dimensions accrues s'étend le long de la section de bord (9) de l'élément de boîtier (2) et les dimensions augmentent dans une direction parallèle au plan principal (P) de l'élément de boîtier (2).

8. Structure de boîtier (1) selon l'une quelconque des revendications précédentes, dans laquelle l'élément de boîtier (2) comprenant la section (3) ayant des dimensions accrues est usiné à partir d'un bloc de verre massif.

9. Structure de boîtier (1) selon l'une quelconque des revendications précédentes, comprenant en outre un cadre de support intérieur (8) s'étendant dans un élément de boîtier (2).

10. Structure de boîtier (1) selon l'une quelconque des revendications précédentes, dans laquelle les éléments de boîtier (2) sont reliés entre eux au moyen d'un adhésif.

11. Structure de boîtier (1) selon l'une quelconque des revendications précédentes, dans laquelle au moins l'un d'un premier élément de boîtier (2a) et d'un deuxième élément de boîtier (2b) comprend une plaque de verre.

12. Structure de boîtier (1) selon la revendication 11, dans laquelle un troisième élément de boîtier (2c) comprend un bord d'espacement comprenant la section (3) ayant des dimensions accrues.

13. Dispositif électronique comprenant une structure de boîtier (1) selon l'une quelconque des revendications 1 à 12.
